# EUROPEAN PATENT SPECIFICATION

(11) **EP 0 429 299 B1**
(45) Date of publication and mention of the grant of the patent: **08.06.1994**
(21) Application number: 90312665.4
(22) Date of filing: 20.11.1990
(51) Int. Cl.: F16G 5/06, F16G 1/28

(54) **V-ribbed belt and method of fabricating the same**
Keilrippenriemen und Herstellungsverfahren
Courroie à nervures en V et procédé de fabrication

(30) Priority: 20.11.1989 JP 302442/89
(43) Date of publication of application: 29.05.1991
(73) Proprietor: MITSUBOSHI BELTING LTD., Nagata-ku Kobe City Hyogo, pref. (JP)
(72) Inventor: Mishima, Kyoichi, No. 7-58-103, 5-chome, Kobe, Hyogo (JP); Kumazaki, Toshimi, No. 16-1-402-401,, Kobe, Hyogo (JP); Kawashima, Masahiko, No. 3-20, 4-chome, Kita-ku, Hyogo (JP)
(74) Representative: Bond, Bentley George

(56) References cited:
- EP-A- 0 040 908
- CA-A- 1 041 414
- US-A- 3 891 405
- US-A- 4 555 241
- US-A- 4 798 566
- PATENT ABSTRRACTS OF JAPAN, vol. 9, no. 77 (M-369)[1800], 6th April 1985;& JP-A-59 208 245 (MITSUBOSHI BELT) 26-11-1984
- PATENT ABSTRACTS OF JAPAN, vol. 6, no. 178 (M-155), 11th September 1982;& JP-A-57 086 648 (MITSUBOSHI BELTING) 29-05-1982

## Description

This invention relates to power transmission belts and, more particularly, to a belt in which fibers are embedded in the belt body and exposed at the belt flanks to minimize noise generation as the belt flanks engage and separate from a cooperating pulley. The invention is also directed to a method of forming the power transmission belt to increase the exposed surface area of the fibers at the belt flanks.

V-ribbed belts are used in a number of diverse environments. Exemplary applications for V-ribbed belts are in automobiles and other types of vehicles, agricultural equipment, domestic electrical equipment, etc.

The typical V-ribbed belt has a plurality of longitudinally extending, parallel ribs which engage within corresponding configured pulley grooves. The V-ribbed belt has a number of advantages over conventional V-belts. Most of the advantages of the V-ribbed belt stem from its thin construction. This not only gives the belt a compact configuration, but makes it highly flexible which allows it to be used in conjunction with small diameter pulleys. Because of the inherent flexibility of the V-ribbed belt, the bending stresses in the belt in use are minimized, which accounts for a long belt life. At the same time, the flexibility of the V-ribbed belt accounts for the system driving the belt consuming significantly less energy. A further advantage of the V-ribbed construction is that normally the ribs do not move radially into the cooperating pulley grooves as far as a conventional V-belt would. This reduces the frictional forces on the belt during operation and results in a prolonging of the belt life as well as additional energy savings.

The V-ribbed belt construction does, however, have some drawbacks. The V-ribbed belt is prone to slipping relative to cooperating pulleys if the tension on the belt becomes excessive and/or if there is an abrupt variation in load on the associated system. The result of this may be a shortened belt life as a result of the belt rubber being abraded or cracking or the belt otherwise wearing out.

Another problem with V-ribbed belt systems results from the shallower grooves required in the pulleys around which the belt is trained. Since the ribs do not have to extend radially inwardly into the grooves as far as with V-belts, the pulley grooves are commonly made of a relatively shallow depth. A result of this is that dust, sand, mud and other foreign matter encountered in the operating environment, tend to accumulate in the pulley grooves. This foreign matter may no only prevent full seating of the ribs in the pulley grooves, which could result in belt slippage, but also abrades the belt rubber in use which may shorten the belt life.

A still further problem with V-ribbed belts is that of noise generation as the belt ribs move into and out of engagement with the cooperating pulleys. Noise is also generated as the belt slips in a circumferential direction during system operation.

One proposed solution to the problem of noise generation has been the provision of a cloth layer on the belt ribs. The cloth layer does reduce noise generation and wear on the belt rubber, but introduces new problems. First, the application of the cloth layer involves an additional manufacturing step. This complicates manufacturing and increases the attendant costs. Further, the cloth itself is prone to failure and, once this occurs, continued use of the belt may become impractical.

An alternative to the provision of a cloth layer is the use of short fibers which are commonly sprayed onto the belt flank surfaces. While the use of sprayed on fibers does in fact reduce noise levels and abrasion on the belt body, the application of the fibers, as with the aforementioned cloth, complicates belt manufacture. Further, it is difficult to permanently adhere the short fibers to the belt flanks and, consequently, the fibers tend to fall off during use. The beneficial effect of the fibers may then not be consistently realized during the life of the belt. Further, the flexing characteristics of the belt are altered by the provision of each of the cloth and fibers.

A further proposed solution to the above problems has been the embedding of a fabric layer in the ribs during manufacture. This has proven impractical in V-belts since the ribs, in most applications, do not have sufficient depth to accommodate the fabric layer.

The V-ribbed belts of the prior art have been constructed in various different manners. One such method is disclosed in JP-B-5 215 310. This publication discloses a matrix manufacturing method employing a cylindrical mandrel which is surrounded by a tubular, vulcanized, rubber forming sleeve. The sleeve has axially spaced, circumferential, V-shaped grooves integrally formed therein and corresponding to the desired end shape of the ribs of the V-ribbed belt. The belt components are sequentially built up onto the forming sleeve. In one exemplary belt construction, a flat rubber layer is initially wound onto the sleeve or, alternatively, that layer is molded in place. Tensile cords are then spirally wound around the rubber layer to press the rubber layer into partial conformance with the grooves. An additional rubber layer followed by a fabric layer are then laminated in place after which the belt components are vulcanized. The vulcanized belt sleeve is then cut to produce individual belts.

The matrix method of belt formation has inherent drawbacks. One of the biggest problems is encountered when the first rubber layer against the forming sleeve is not a molded layer, as for example when it is applied as a sheet layer. As the belt components are vulcanized, the rubber layer conforms fully to the ribs. As this occurs, the tensile cords tend to conform to the contour of the forming sleeve; that is, the tensile cords tend to move radially into the grooves and bend around the walls between the adjacent grooves. The tensile cord orientation thus deviates from the desired straight longitudinal direction. The irregular tensile cord pattern commonly results in an effectively bent/slackened tensile cord which straightens under load to allow undesirable elongation of the belt.

While molding of the first placed belt rubber layer against the forming sleeve eliminates the above problem, it also complicates manufacture. The number of belt forming steps is increased, which adds undesirably to the cost of the belt.

A further problem common to both matrix formation methods described above is that it is difficult to remove the vulcanized belt sleeve wrapped around the forming sleeve. Further, the life of the forming sleeve is inherently short due to the fact that it is repetitively subjected to severe conditions such as heating at high temperatures, high pressure compression, cooling, etc.

Another generic belt formation method is disclosed in JP-B-5 217 552. In this publication, the ribs are formed by grinding. The belt components are sequentially built up onto a mandrel in an inside out arrangement. In one exemplary belt construction, the following layers are built up in sequence: fabric; a rubber layer; tensile cords; and an outer rubber layer which defines the innermost layer of the completed belt. Once all belt components are in place, the belt sleeve is vulcanized. A grinding wheel, having a plurality of circumferential V-shaped grooves, is urged against the outermost rubber layer to define the belt ribs. To accomplish this, both the belt sleeve and the grinding stone/grinding wheel are rotated about substantially parallel axes as they are moved, one against the other, at right angles to their rotational axes.

It is known to define V-ribbed belts with short, laterally extending fibers in the compression section. When the ribs are defined by conventional grinding techniques, such as that described above, the fibers are cleanly severed in the same plane as the belt flanks. There is a tendency of the grinding wheel to melt the rubber and in so doing cover the lateral-most surface of the severed fibers with rubber during this process. Consequently, little or no part of each fiber ends up being directly exposed at the belt flanks. The result is that the belt flank is efficiently solid ruber which has a high coefficient of friction compared to the fibers and which binds as the ribs encounter the pulley surfaces and move away therefrom during operation. The result is undesirable noise generation, which was previously discussed.

While increasing the quantity of laterally extending fibers in the compression section overcomes the above problem, results in more exposed fibers at the belt flanks, and achieves the desired result of decreasing the frictional coefficient, the quantity of fibers necessary to accomplish this may compromise the integrity of the belt compression section. Further, as the number of fibers increases, it becomes more difficult to uniformly distribute the fibers. The flexibility and life of the belt may also be compromised. Increasing the number of fibers can create points of weakness in the rubber in which the fibers are embedded.

Another known method of dealing with the above noted problems is disclosed in JP-B- 58 34 697. In this publication, a belt sleeve is disclosed with an inner, expansible canvas layer, which is formed together with the ribs during manufacture.

The difficulty with the above method is that the canvas employed is expandable readily only in a single direction. If the canvas is arranged to be expandable in the longitudinal direction of the belt, it is difficult to conform the canvas transversely thereto around the individual ribs. If the canvas is aligned to be expandable laterally of the belt, while this facilitates formation of the canvas around the ribs, flexibility of the belt is deteriorated. The result is excessive heat generation and possible cracking as the belt is flexed during operation.

In US-A-4798566, there is disclosed a generic power transmission belt having discontinuous fibers protruding from oppositely facing friction driving surfaces, the fibers being bent to expose lateral side portions thereof.

According to the present invention there is provided a power transmission belt comprising:
a belt body defining laterally spaced, oppositely facing flank surfaces for engagement with a pulley for said power transmission belt; and
at least one fiber within said belt body and extending in a lateral direction, said fiber having a cross-sectional area taken transversely of its length, and said fiber having a surface exposed at at least one said flank surface;
characterised in that said exposed fiber surface is flared by melting to have an exposed cross-sectional area that is greater than the cross-sectional area of the fiber, said exposed fiber area providing a sound-dampening cushion that reduces noise generation as the one flank surface engages and separates from a pulley during operation of the power transmission belt.

Accordingly, the area of the fiber exposed at the belt flank surface is effectively increased. This reduces the coefficient of friction for the rubber belt flank surfaces and results in reduction of noise generation as the belt flank surfaces impact and separate from the cooperating pulley surfaces. The effective exposed surface area of the fibers is increased without increasing the number of fibers so that the integrity of the belt body can be maintained while realizing the improved noise reducing benefits.

In a preferred form, a plurality of the fibers are provided in the belt body. Each fiber is flared so that its exposed surface area at the belt flank is 1.5 to 5 times the cross-sectional area of the fiber.

The invention can be practised with all types of belts, i.e. V-belts, V-ribbed belts, and other frictionally operating belt configurations. The invention is particularly adaptable to V-ribbed belts containing a plurality of longitudinally extending ribs, each having oppositely facing flank surfaces.

Many different arrangements of belt components are also contemplated by the invention. In a preferred form, the belt has an inside surface and an outside surface with the outside surface defined by a fabric sheet.

The fibers may be made from any of a number of different materials. For example, the fibers may be made from synthetic materials such as nylon, vinyl alcohol, polyester, aromatic polyamide, etc. Alternatively, the fibers can be natural fibers such as cotton and pulp. The fibers can be all synthetic, or a combination of synthetic and natural fibers.

In a preferred form, the fibers extend laterally and are embedded in a rubber matrix with the ratio of fibers to rubber being 5-30 parts by weight of fiber to 100 parts by weight of rubber. Preferably, when there is a mixture of natural and synthetic fibers, each type of fiber is in a quantity of less than 30 parts by weight to 100 parts by weight of rubber.

The flaring of the exposed end of the fiber can be accomplished by an of a number of different melting techniques. In a preferred form, the exposed end of the fiber is melted by a grinding wheel. Preferably, the grinding wheel has a surface roughness of 80 to 200 meshes.

In a preferred form, the fibers are provided in the compression section of the belt. The exposed surface area of the fibers in the compression section is preferably between 40% to 80% of the total surface area of the flank surfaces for the compression section of the belt.

Preferably, the rubber in which the fibers are embedded is at least one of NR (natural rubber), SBR (styrene butadiene rubber) and CR (chloroprene rubber).

Preferably, the power transmission belt has a body defining a tension section and a compression section, a plurality of longitudinally extending ribs, each having laterally spaced oppositely facing flank surfaces for engagement with a pulley, and plurality of elongate fibers within each rib and extending generally in a lateral direction. Each fiber in the plurality of fibers has a cross-sectional area taken transversely to its length and an exposed surface at at least one of the rib flank surfaces. The exposed surfaces are flared to define a surface area greater than the cross-sectional area of each of the plurality of fibers.

The present invention also provides a method of forming a power transmission belt, said method comprising the steps of:
providing a belt sleeve defining an axis and having a rubber layer with elongate fibers embedded therein and extending generally parallel to each other in a first line that is generally parallel to the axis of the belt sleeve;
rotating said belt sleeve about its axis; and
providing a grinding element for cutting said rubber layer and fibers to define ribs with oppositely facing flanks;
characterized in that the method further comprises the step of urging said rotating belt sleeve and grinding element, one against the other in first and second steps and, as an incident thereof, causing the grinding element to define said oppositely facing flanks and to expose and enlarge surfaces of said elongate fibers at the surfaces of said flanks, said belt sleeve and grinding element being urged one against the other transversely of the first line at a first speed during said first step and at a second speed different than said first speed during said second step.

In a preferred form, the first speed is greater than the second speed.

It is a principal objective of the present invention to manufacture belts by a method which effects an enlargement of the effective area of the fibers exposed at the belt flanks.

To most effectively accomplish this, the first step speed is at least 0.3 mm/min. with the second step being less than 0.3 mm/min.

Preferably, the grinding element is rotated about an axis as the rotating belt sleeve and grinding element are urged, one against the other. The axes are preferably substantially parallel with the grinding element and sleeve preferably rotated oppositely about their respective axes.

The belt sleeve and grinding element have outer edges. The outer edge of the belt sleeve preferably rotates at at least 0.07 m/sec during the first step while the outer edge of the grinding element preferably rotates at at least 15 m/sec during the first step. During the second step, the outer edge of the belt sleeve preferably rotates at no more than 0.07 m/sec and the outer edge of the grinding element preferably rotates at less than 15 m/sec.

During the second step, the belt sleeve and grinding element preferably move relatively to each other transversely of their axis between 0.1 and 1 mm to a final position in which the belt flank surfaces are fully formed.

Preferably, the rotating belt sleeve and grinding element are urged, one against the other, through a range to cause the grinding element to define the oppositely define the oppositely facing belt flanks, and the grinding element and rotating belt sleeve are rotated at a first relative rotational velocity during a first part of the range and at a second relative rotational velocity during a second part of the range.

The belt sleeve and grinding element are preferably urged, one against the other, from a first relative position in which the belt sleeve and grinding element initially engage to a final relative position in which the oppositely facing belt flanks are fully defined. Preferably, the relative rotational velocity of the grinding element and belt sleeve is the slower of the first and second relative rotational velocities as the belt sleeve and grinding element move into their final relative position.

Preferably, the belt sleeve and grinding element rotate oppositely about their respective axes.

Preferably, the grinding element is a grinding wheel having a surface roughness of 80 to 200 meshes and preferably 100 to 120 meshes.

For a better understanding of the invention and to show how the same may be carried into effect, reference will now be made, by way of example only, to the accompanying drawings, in which:
Fig. 1 is a perspective, cross-sectional view of a V-ribbed belt according to the present invention;
Fig. 2 is an enlarged perspective view of one part of the body of the belt in Fig. 1 taken in cross sections.
Fig. 3 is a cross sectional view of belt components built up into an exemplary belt sleeve into which individuals ribs are formed according to the present invention;
Fig. 4 is a schematic side elevation view of a system for grinding belt grooves in a preformed belt sleeve as shown in Fig. 3;
Fig. 5 is an enlarged cross-sectional view of a cooperating preformed belt sleeve and grinding element showing the grinding element fully extended into the belt sleeve;
Fig. 6 is a schematic, side elevation view of a system for testing sound generation of a belt system;
Fig. 7 is a graph showing the results of a sound generation test using a belt according to the present invention;
Fig. 8 is a view similar to that in Fig. 2 showing a V-ribbed belt made according to conventional manufacturing techniques;
Fig. 9 is a graph showing the results of a sound generation test for a prior art belt such as that in Fig. 8;
Fig. 10 is a photograph showing a magnified section of a belt flank formed according to the present invention; and
Fig. 11 is a view as that in Fig. 10 showing a belt flank made according to conventional manufacturing techniques.

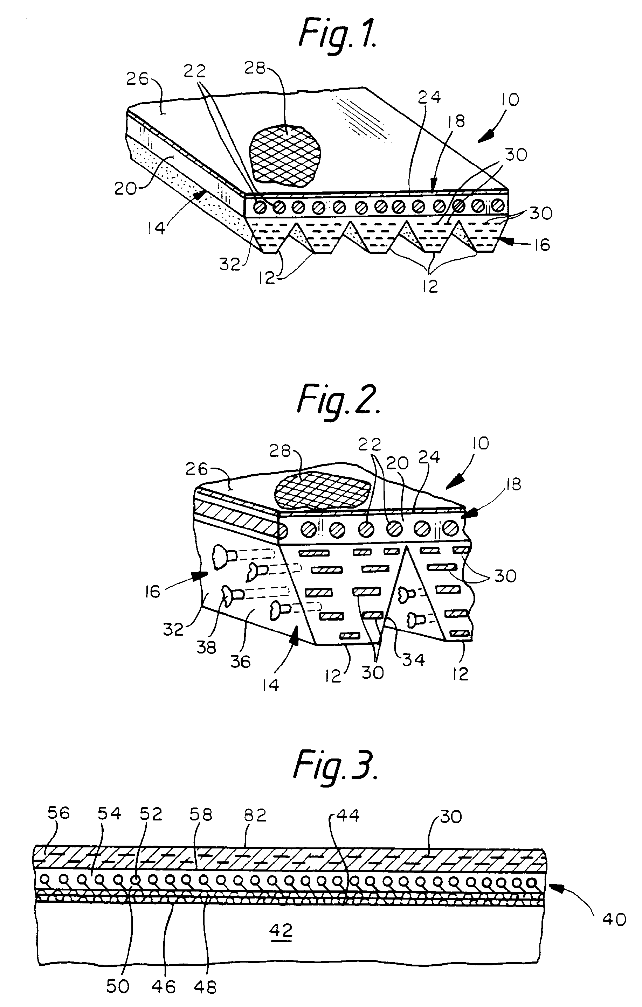

In Figs. 1 and 2, a V-ribbed belt is disclosed at 10, made in accordance with the present invention. The belt 10 is what is known in the art as a V-ribbed belt, which belt 10 includes a plurality of parallel, longitudinally extending ribs 12. It should be understood that while the invention is described with respect to a V-ribbed belt construction, it is applicable in the same manner with other belts, such as a conventional V-belt and other endless belt constructions operable through frictional engagement with a pulley system.

The belt 10 has a body 14 consisting of an inner compression section 16 and an outer tension section 18. The tension section 18 consists of a rubber matrix 20 in which longitudinally extending tensile cords 22 are embedded. The tensile cords 22 are made of low elongation, high strength bundles of fibers of polyester, nylon, aromatic polyamid fiber, etc. The rubber making up the tension section 18 may be made entirely of one of NR, SBR, CR, etc., or combination thereof.

The outer surface 24 of the tension section 18 has adhered thereto a rubber-coated canvas layer 26. While one such layer 26 is shown, a plurality of the layers could be employed consistently with the invention. The canvas layer 26 is preferably made of woven warp and weft cotton yarns 28.

The ribs 12/compression section 16 are made preferably from the same rubber as that making up the tension section 18. According to the invention, short fibers 30 are dispersed within the rubber 32 defining the ribs 12. The fibers 30 are elongate and oriented to extend generally parallel to each other in a lateral direction with respect to the belt 10. These fibers are preferably 3 to 10 mm in length and are either synthetic or natural fibers. The synthetic fiber material is preferably one of nylon, vinyl alcohol, polyester aromatic polyamid, etc. The natural fibers may be cotton, pulp, etc. The fibers can be all synthetic, all natural, or a combination thereof.

Preferably, the fibers 30 are provided in the quantity of 5-30 parts by weight to 100 parts by weight of rubber in the belt compression section 16. When synthetic and natural fibers are mixed, and the synthetic fibers are not present in the amount of at least 30 parts by weight to 100 parts by weight of rubber, it is preferred to add natural fibers to increase the overall fiber content to a maximum of 30 parts by weight of fiber to 100 parts by weight of rubber.

To explain the details of the present invention, the description herein will be focused on the belt rib 12 on the left end of the belt body 14 in Fig. 1. The belt rib 12 defines laterally oppositely facing flank surfaces 34, 36. According to the invention, the exposed surface 38 of the belt fibers 30 is flared so that its effective diameter is increased over the undeformed cross-sectional area of the body of the fibers 30. This flaring is effected preferably by the manufacturing process which is described below. During the manufacturing process, the exposed surfaces 38 of the fibers 30 are melted, although other methods which would effect the same result are contemplated by the invention.

Preferably, the exposed surface 38 of each of the fibers 30 has an area of from 1.5 to 5 times as large as the cross-sectional area of the untreated fibers. The untreated/undeformed fibers generally have a cylindrical configuration with a substantially uniform cross-sectional area throughout their lengths. According to the invention, the ratio of the area of the exposed surfaces 38 of the fibers 30 to the area of the belt flank surfaces 34, 36 is in the range of 40-80%. The significance of the flaring step is that it allows the exposed surface area of the fibers 30 to be increased without increasing the quantity of fibers within the rubber 32.

If the flared surfaces 38 have an area of less than 1.5 times the cross-sectional area of the fibers 30, it is necessary to increase the quantity of fibers sufficiently that the flexibility of the belt is diminished. If the exposed surfaces 38 of the fibers 30 are compressed to have an exposed area of greater than 5.0 times the cross-sectional area of the fibers, the exposed portions of the fibers of the belt flanks 34, 36 become weak and may readily break off during operation.

If the combined area of the surfaces 38 is less than 40% of the belt flank surface area for the compression section 16, there is sufficient rubber in the compression section exposed during operation to directly contact the pulleys and generate an undesirable amount of noise in use. At the same time, if the amount of rubber exposed is sufficiently large, the flank surfaces 34, 36 are susceptible to significant wear over time.

On the other hand, if the area of the exposed surfaces 38 of the fibers 30 is greater than 80%, the friction coefficient between the belt and the pulley is reduced to the extent that a driving force is ineffectively transmitted by the belt 10.

The method of manufacturing power transmission belts, according to the present invention, to produce the flared fiber surfaces 38, is described with respect to Figs. 3-5. In Fig. 3, a belt sleeve 40 is shown in place on a forming drum 42. The belt components are built in an inside out relationship sequentially from the outer surface 44 of a forming drum 42. Two layers of expansible canvas 46, 48 are first placed around the drum 42. Preferably, the canvas is rubber coated and one or more than two layers could be employed. The canvas is expansible primarily in one direction and in this case the canvas layers 46, 48 are arranged to be expansible most readily along the longitudinal extent of the belt. An adhesive rubber layer 50 is placed against the fabric layer 48 after which low elongation, high strength tensile cords 52 are put in place, followed by an adhesive rubber sheet 54. A rubber layer 56, thicker than the combined thicknesses of the layers 50, 54, is laminated to the surface 58 of the rubber layer 54. The rubber layer 56 has the aforementioned fibers 30 embedded therein in substantially parallel alignment.

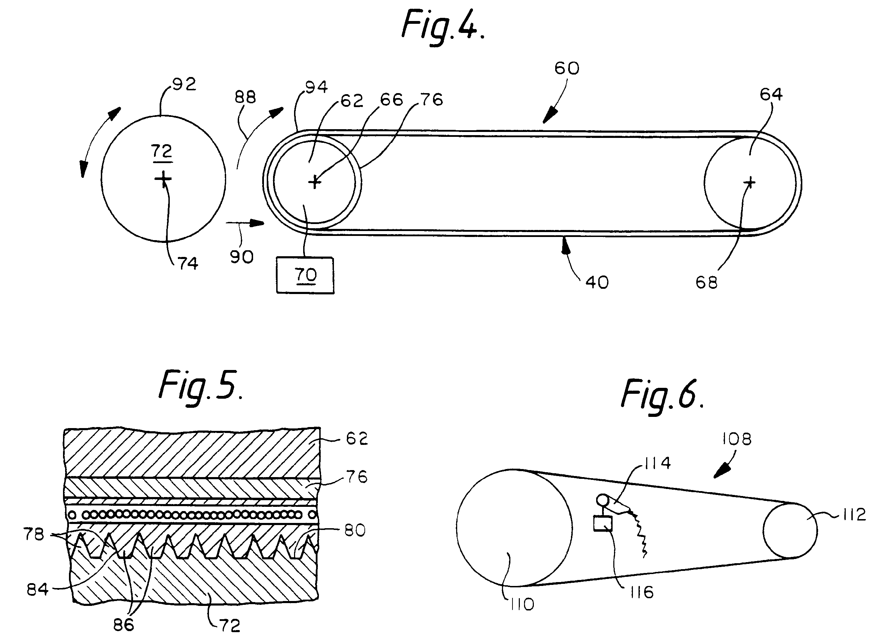

The completed belt sleeve 40 is vulcanized by known pressure heating methods. Once the sleeve 40 is vulcanized, it is removed from the forming drum 42 and transferred to the system shown in Fig. 4 on which individuals ribs can be formed in accordance with the present invention.

The system at 60 in Fig. 4 consists of a drive drum 62 and a driven drum 64. The drums 62, 64 are rotatable about parallel, spaced axes 66, 68 respectively. The vulcanized belt sleeve 40 is trained about the drums 62, 64 and drawn sufficient taut so that the belt sleeve 40 is positively driven as a drive means 70 for the drum 62 rotates the drum 62.

A polishing/grinding element 72, preferably in the form of a grinding wheel, is provided to define the ribs in the compression rubber layer 56. The grinding element has a rotational axis 74 parallel to and spaced from the axes 66, 68 for the drive and driven drums 62, 64 respectively. The grinding element 72 can cooperate with the belt sleeve 40 in the vicinity of either the driving drum 62, as shown in Fig. 4, or the driven drum 64. With the arrangement shown, a protective sleeve 76 surrounds the drum 62 to prevent damage thereto during the rib forming step. A like sleeve (not shown) would be disposed on the driven drum 64 with the grinding element 72 repositioned to form the ribs thereat.

The grinding element 72 has cylindrical body with axially spaced, circumferentially extending, V-shaped teeth 78 between which a web surface 80 is formed. As described more fully below, the grinding element 72 is advanced toward the belt sleeve 40 with the teeth 78 progressively penetrating the rubber layer 56 until the web 80 abuts the inner belt surface 82 to arrest relative movement between the grinding element 72 and best sleeve 40, as shown in Fig. 5. The teeth 78 correspond in number and dimension to the longitudinal grooves 84 between the belt ribs 86.

During the rib forming step, the belt sleeve 40 is rotated in a clockwise direction i.e. in the direction of arrow 88 in Fig. 4. The grinding element 72 is preferably rotated oppositely to the direction of rotation of the drums 62, 64. However, it is within the scope of the invention to rotate the grinding element 72 in the same direction as the drums 62, 64.

As the drums 62, 64 and grinding element 72 are rotated, the grinding element 72 is advanced in the direction of arrow 90, perpendicular to its axis 74, into engagement with the rotating belt sleeve 40. According to the invention, the grinding/rib forming operation is performed in two separate steps as the grinding element 72 moves in a range between a first position, in which the teeth 78 thereon initially engage the belt sleeve 40, and a final position, in which the grinding element 72 is moved fully against the belt sleeve 40 and defines the final rib shape.

During the first part/step of the process, in which the grinding element teeth 78 engage and extend partially into the rubber layer 56, the relative rotational speed of the grinding element 72 and drums 62, 64 and the rate of relative movement of the grinding element 72 and belt sleeve 40, one against the other, are greater than during the second step. In a preferred arrangement, the first step is performed with the outer edge 92 of the grinding element 72 rotating at 15 m/sec or more, with the outer edge 94 of the belt sleeve 40 rotating at at least .07 m/sec, with the belt sleeve 40 and grinding element 72, during the first step, being advanced in a line, one against the other, at a rate of at least .3 mm/min. During the second step, the grinding element 72 and belt sleeve 40 move relative to each other at a rate of less than 0.3 mm/min until the final relative position therefor, as shown in Fig. 5, is realized. During the second step, the edge 92 of the grinding element 72 rotates at a speed of less than 15 m/sec, while the edge 94 of the belt sleeve 40 rotates at less than .07 m/sec. The speed of translation of the grinding element 72 and belt 40, one against the other, is less than .3 mm/min during the second step.

The surface roughness of the grinding wheel is between 80 to 200 meshes and preferably from 100 to 120 meshes during both the first and second steps of rib formation.

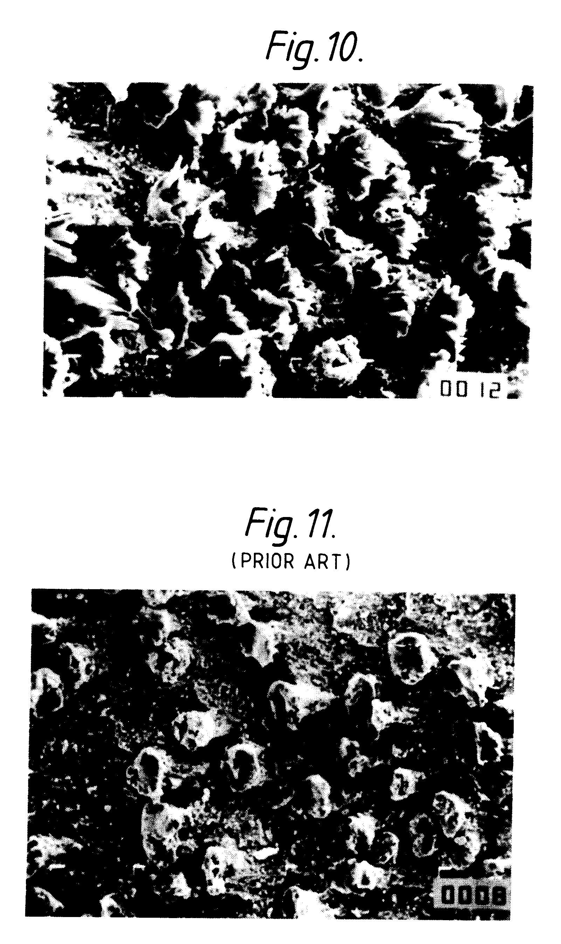

In Fig. 10, a magnified section of one of the belt rib flanks is shown. As is apparent from the photograph, the fibers 30 are significantly flared at the exposed ends thereof to provide a sound dampening cushion with a reduced coefficient of friction to minimize the sound generation upon the belt flanks encountering and separating from the cooperating pulleys.

Fig. 11 shows a magnified section of one of the flanks of the ribs of a prior art belt, such as that 96 shown in Fig. 8, and made according to conventional manufacturing techniques. The belt 96 in Fig. 8 has ribs 98 with fibers 100 embedded therein, as in the inventive belt. It can be seen, however, that the exposed ends 102 at the belt flank surface 104 are cleanly severed during manufacture. Consequently, the combined surface area of the fiber ends 102 is minimal compared to the overall cross section of the belt flank 104. This condition is shown clearly in Fig. 11.

Consequently, with the prior art belt 96, shown in Figs. 8 and 11, the fibers 100 afford very little cushion and produce little sound dampening effect. Instead, the rubber 106 in which the fibers 100 are embedded, has a substantial area which contacts the belt pulleys in use. Due to the high coefficient of friction of the rubber 106, the rubber 106 tends to stick to the pulley surfaces as it encounters and separates therefrom during use. This condition produces a substantial amount of undesirable noise. At the same time, because the rubber 106 contacts the pulleys over a substantial area, it is prone to wearing significantly over time.

To demonstrate the advantages of the present invention, the sound generation of a belt made according to the present invention was compared with that for a prior art belt. The composition of each belt was the same.

The belt used in the test was a belt identified by number 5PK1104. The fibers used were monofilament vinyl alcohol fibers sold under the Registered Trade Mark VINYLON. The fibers had an average length of 5 mm with a thickness such that 9 km thereof weighs 6 g (i.e. a thickness of 6 denier). The fibers were mixed with a rubber matrix in a ratio of 20 parts by weight to 100 parts by weight of rubber. The belt was ground/polished in two steps with the first step terminating with the grinding wheel teeth .5 mm from their final depth. The high speed grinding in the first step was carried out with the grinding wheel rotating at 23.5 m/sec and the belt sleeve rotating at .082 m/sec. During the first step, the grinding wheel and belt sleeve were advanced, one against the other, at .6 mm/min.

During the second/low speed step, the belt sleeve and grinding wheel were advanced, one against the other, at .1 mm/min for the last .5 mm of cutting. During the second step, in which the last .5 mm was cut, the grinding wheel was rotated at 6.5 m/sec with the sleeve rotated at .018 m/sec.

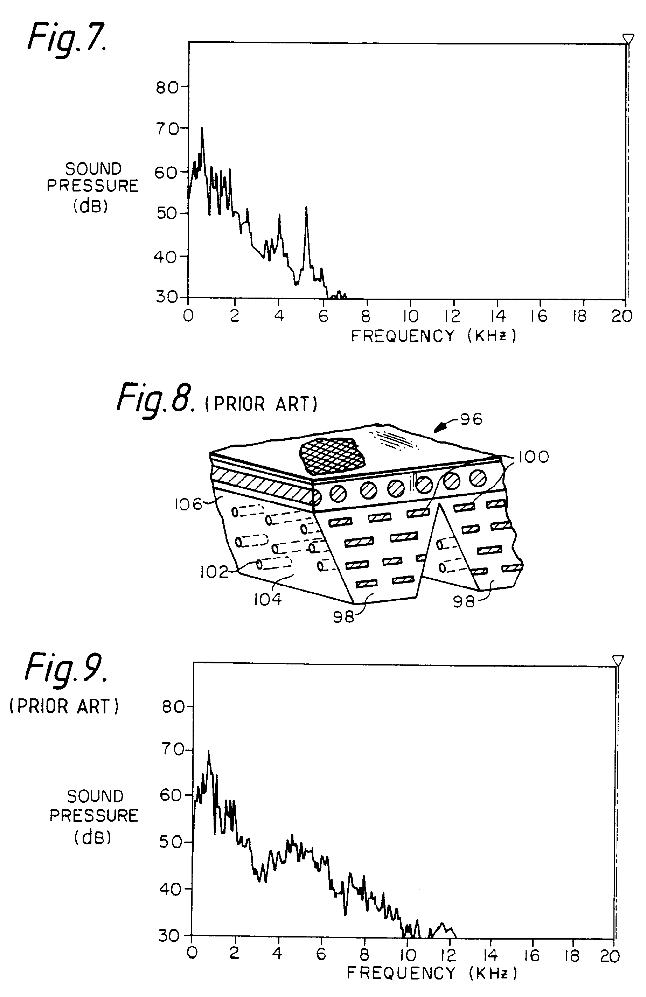

Noise generated by the belts in use was then compared. The noise test was conducted on a system such as that shown at 108 in Fig. 6. The system 108 has a driving pulley 110 and a driven pulley 112. The diameter of the driving pulley 110 was 170 mm and the diameter of the driven pulley 112 was 72 mm. The belts were operated at 883N (90 kgf) initial tension at a speed of 2,000 rpm for 20 minutes, then decelerated to 600 rpm. A microphone 114 was located with its sensing end 116, shown schematically in Fig. 6, 10 cm from the driving pulley 110. The sound generated was graphed, with the graphs for the inventive belt shown in Fig. 7 and for the prior art belt in Fig. 9.

It can be seen that the prior art belt generated considerably higher sound levels. The sound was very effectively damped by the fibers in the inventive belt over the audible range of 4-20 KHz, thereby preventing abnormal noise generation, as at startup in an automobile.

## Claims

1. A power transmission belt (10) comprising:
a belt body (14) defining laterally spaced, oppositely facing flank surfaces (34,36) for engagement with a pulley for said power transmission belt (10); and
at least one fiber (30) within said belt body (14) and extending in a lateral direction, said fiber (30) having a cross-sectional area taken transversely of its length, and said fiber (30) having a surface (38) exposed at at least one said flank surface (34,36);
characterised in that said exposed fiber surface (38) is flared by melting to have an exposed cross-sectional area that is greater than the cross-sectional area of the fiber (30), said exposed fiber area providing a sound-dampening cushion that reduces noise generation as the one flank surface (34,36) engages and separates from a pulley during operation of the power transmission belt (10).

2. A belt (10) according to claim 1 wherein a plurality of fibers (30) are provided in said belt body (14) and a plurality of the fibers (30) have flared surfaces (38) such as the first named fiber surface (38) so that a plurality of the flared surfaces (38) are exposed at each belt flank surface (34,36).

3. A belt (10) according to claim 1 or 2 wherein the exposed fiber surface (38) has an area that is 1.5 to 5 times the cross-sectional area of the fiber (30).

4. A belt (10) according to any of claims 1 to 3 wherein the belt (10) comprises a V-ribbed construction with a plurality of longitudinally extending ribs (12) each having oppositely facing flank surfaces (34,36).

5. A belt (10) according to any of claims 1 to 4 wherein the belt (10) has an inside surface and an outside surface (24) and the outside surface (24) is defined by a fabric sheet (26).

6. A belt (10) according to any of claims 1 to 5 wherein the fiber (30) is made from at least one of vinyl alcohol, polyester and polyamide.

7. A belt (10) according to claim 6 wherein a plurality of fibers (30), such as the first named fiber (30), are provided, said fibers (30) being embedded in a rubber matrix (20) with the ratio of fibers (30) to rubber amounting to 5 to 30 parts by weight of fibers (30) to 100 parts by weight of rubber.

8. A belt (10) according to any of claims 1 to 5 wherein a plurality of said fibers (30) are provided in the belt body (14), said plurality of fibers (30) being a mixture of synthetic and natural fibers (30).

9. A belt (10) according to any of claims 1 to 5 wherein there are a plurality of fibers (30) in said belt body (14) extending in a lateral direction, said plurality of fibers (30) being embedded in a rubber matrix (20) with the ratio of fibers (30) to rubber being 5 to 30 parts by weight of fibers (30) to 100 parts by weight of rubber.

10. A belt (10) according to claim 9 wherein the plurality of fibers (30) is a mixture of synthetic and natural fibers (30) and the synthetic and natural fibers (30) are each in a quantity of less than 30 parts by weight to 100 parts by weight of rubber in the rubber matrix (20).

11. A belt (10) according to any of claims 1 to 10 wherein the melting to the fiber (30) is effected by a grinding process.

12. A belt (10) according to claim 11 wherein the melting of the fiber (30) is effected by a grinding wheel (72) having a surface roughness of 80-100 meshes.

13. A belt (10) according to any of claims 1 to 12 wherein the belt (10) has a tension section (18) and a compression section (16), a plurality of laterally extending fibers (30) are provided in the compression section (16), said plurality of fibers (30) each having an exposed, flared surface (38) at the one flank surface (34,36), the plurality of fibers (30) are embedded in rubber which defines at least a part of the one flank surface (34,36) and the area of the fiber surfaces (38) exposed at the one flank surface (34,36) in the compression section (16) is 40-80% of the total surface area of the one flank surface (34,36) defining said compression section (16).

14. A belt (10) according to claim 13 wherein the rubber which the fibers (30) are embedded in is at least one of NR (natural rubber), SBR (styrene butadiene rubber) and CR (chloroprene rubber).

15. A belt (10) according to claim 1 wherein said belt body (14) defines a tension section (18) and a compression section (16), and further includes:
a plurality of longitudinally extending ribs (12) with each said rib (12) having laterally spaced, oppositely facing flank surfaces (34,36) for engagement with a pulley; and
a plurality of elongate fibers (30) within each said rib (12) and extending generally in a lateral direction, each said plurality of fibers ((30) having a cross-sectional area taken transversely of its length, each said fiber (30) having an exposed surface (38) formed by melting at at least one of the rib flank surfaces (34,36), said exposed surfaces (38) on each of the plurality of fibers (30) being flared to define a combined area greater than the cross-sectional areas of each of the plurality of fibers (30).

16. A belt (10) according to claim 15 wherein the combined areas of the exposed fiber surfaces (38) at the one rib flank surface (34,36) in the compression section (16) is between 40-80% of the surface area of the flank surface (34,36) in the compression section (16).

17. A belt (10) according to claim 15 wherein the exposed surface (38) areas for each of said plurality of fibers (30) is 1.5 to 5 times the cross-sectional area of each of the fibers (30).

18. A method of forming a power transmission belt (10), said method comprising the steps of:
providing a belt sleeve (40) defining an axis and having a rubber layer (56) with elongate fibers (30) embedded therein and extending generally parallel to each other in a first line that is generally parallel to the axis of the belt sleeve (40);
rotating said belt sleeve (40) about its axis; and
providing a grinding element (72) for cutting said rubber layer (56) and fibers (30) to define ribs (12) with oppositely facing flanks (34,36);
characterized in that the method further comprises the step of urging said rotating belt sleeve (40) and grinding element (72), one against the other in first and second steps and, as an incident thereof, causing the grinding element (72) to define said oppositely facing flanks (34,36) and to expose and enlarge surfaces (38) of said elongate fibers (30) at the surfaces of said flanks (34,36), said belt sleeve (40) and grinding element (72) being urged one against the other transversely of the first line at a first speed during said first step and at a second speed different than said first speed during said second step.

19. A method according to claim 18 wherein said first speed is greater than said second speed.

20. A method according to claim 18 or 19 wherein the first step speed is at least 0.3 mm/min.

21. A method according to any of claims 18 to 20 wherein the second step speed is less than 0.3 mm/min.

22. A method according to any of claims 18 to 21 including the step of rotating the grinding element (72) about an axis (74) as the rotating belt sleeve (40) and grinding element (72) are urged one against the other.

23. A method according to any of claims 18 to 22 wherein the belt sleeve axis and grinding element axis (74) are substantially parallel and the belt sleeve (40) and grinding element (72) rotate oppositely about their respective axes.

24. A method according to any of claims 18 to 23 wherein the belt sleeve (40) has an outer edge (94) and the outer edge (94) during the first step rotates at at least 0.07 m/sec.

25. A method according to any of claims 18 to 24 wherein the grinding element (72) has an outer edge (92) and the outer edge (92) during the first step rotates at at least 15 m/sec.

26. A method according to any of claims 18 to 25 wherein the belt sleeve (40) has an outer edge (94) and the outer edge (94) of the belt sleeve (40) during the second step rotates at no more than 0.07 m/sec.

27. A method according to any of claims 18 to 26 wherein the grinding element (72) has an outer edge (92) and the outer edge (92) of the grinding element (72) during the second step rotates at no more than 15 m/sec.

28. A method according to any of claims 18 to 27 wherein in the second step the belt sleeve (40) and grinding element (72) move relative to each other between 0.1 and 1 mm.

29. A method according to claim 18 including the steps of:
urging said rotating belt sleeve (40) and grinding element (72), one against the other, through a range to cause the grinding element (72) to define said oppositely facing belt flanks (34,36), and rotating the grinding element (72) and rotating belt sleeve (40) at a first relative rotational velocity during a first part of the range and at a second relative rotational velocity during a second part of the range.

30. A method according to claim 29 wherein the belt sleeve (40) and the grinding element (72) are urged one against the other from a first relative position in which the belt sleeve (40) and grinding element (72) initially engage to a final relative position in which the oppositely facing belt flanks (34,36) are fully defined and the relative rotational velocity of the grinding element (72) and belt sleeve (40) is the slower of the first and second relative rotational velocities as the belt sleeve (40) and the grinding element (72) move into the final relative position.

31. A method according to claim 29 or 30 wherein the belt sleeve (40) and grinding element (72) rotate oppositely about their respective axes.

32. A method according to any of claims 29 to 31 wherein each of the belt sleeve (40) and grinding element (72) has an outer edge (94,92), and during the first part of the range the outer edge (94) of the belt sleeve (40) rotates at at least 0.07 m/sec and the outer edge (92) of the grinding element (72) rotates at at least 15 m/sec.

33. A method according to any of claims 29 to 32 wherein each of the belt sleeve (40) and grinding element (72) has an outer edge (94,92), and during the second part of the range the outer edge (94) of the belt sleeve (40) rotates at 0.07 m/sec and the outer edge (92) of the grinding element (72) rotates at less than 15 m/sec.

34. A method according to any of claims 29 to 33 wherein the grinding element (72) has a surface roughness of 80 to 200 meshes.

35. A method according to claim 34 wherein the grinding element (72) has a surface roughness of 100 to 120 meshes.

36. A method according to any of claims 29 to 35 wherein said belt sleeve (40) has a compression section (16), made at least partially from rubber, and a tension section (18), the fibers (30) are embedded in the rubber of the compression section (16) in an amount so that the fiber (30) is 5 to 30 parts by weight to 100 parts by weight of rubber.

37. A method according to any of claims 29 to 35 wherein said belt sleeve (40) has a compression section (16), made at least partially from rubber, and a tension section (18), the fibers (30) are embedded in the rubber in the compression section (16) in an amount such that the combined areas of the fiber surfaces exposed at the belt flanks (34,36) is equal to 40-80% of the total surface area of the belt flanks (34,36) in the compression section.

## Patentansprüche

1. Hochleistungs-Treibriemen (10), enthaltend
einen Riemenkörper (14) mit in Querrichtung geteilten, einander gegenüberstehenden Flankenoberflächen (34, 36), die in eine Treibriemen-Riemen scheibe (10) eingreifen können; und
mindestens eine Faser (30) im Inneren des Riemen körpers (14), die sich in Querrichtung erstreckt, wobei die Faser (30) senkrecht zur Länge eine Querschnittsfläche besitzt und eine Oberfläche (38) hat, die auf mindestens einer der Flankenoberflächen (34, 36) freiliegt;
dadurch gekennzeichnet, daß die freiliegende Oberfläche (38) der Faser durch Schmelzen aufgetrieben ist, so daß eine Querschnittsfläche freiliegt, die größer ist als die Querschnittsfläche der Faser (30), wodurch die freiliegende Faserfläche ein geräuschdämpfändes Polster bildet, das die Lärmentwicklung vermindert, wenn bei Betrieb der Hochleistungs-Treibriemen (10) in die Riemenscheibe eingreift und sich von ihr löst.

2. Riemen (10) nach Anspruch 1, wobei eine Anzahl Fasern (30) im Riemenkörper (14) enthalten ist und die Anzahl Fasern (30) aufgetriebene Oberflächen (38), wie die zuerst erwähnte Faseroberfläche (38), besitzt, so daß eine Anzahl aufgetriebener Oberflächen (38) auf jeder Oberfläche einer Riemenflanke (34, 36) freiliegt.

3. Riemen (10) nach Anspruch 1 oder 2, wobei die freiliegende Faseroberfläche eine Fläche besitzt, die 1,5 bis 5mal größer ist als die Querschnittsfläche der Faser (30).

4. Riemen (10) nach irgendeinem der Ansprüche 1 bis 3, wobei der Riemen (10) einen Keilrippenaufbau mit einer Anzahl in Längsrichtung verlaufender Rippen (12) wobei die Rippen einander gegenüberliegende Flankenoberflächen (34, 36) haben.

5. Riemen (10) nach irgendeinem der Ansprüche 1 bis 4 wobei der Riemen (10) eine innere Oberfläche und eine äußere Oberfläche (24) besitzt und die äußere Oberfläche (24) von einer Gewebeschicht (26) gebildet ist.

6. Riemen (10) nach irgendeinem der Ansprüche 1 bis 5, wobei die Faser (30) aus Vinylalkohol, Polyester oder Polyamid besteht.

7. Riemen (10) nach Anspruch 6, wobei eine Anzahl Fasern (30), wie die zuerst erwähnte Faser (30), bereitgestellt wird und die Fasern (30) in einer Gummimatrix (20) eingebettet sind, wobei das Verhältnis Fasern (30) zu Gummi 5 bis 30 Gewichtsteile Faser (30) auf 100 Gewichtsteile Gummi beträgt.

8. Riemen (10) nach irgendeinem der Ansprüche 1 bis 5, wobei eine Anzahl Fasern (30) im Riemenkörper (14) vorhanden sind und die Anzahl Fasern (30) eine Mischung aus Kunstfasern und Naturfasern (30) ist.

9. Riemen (10) nach irgendeinem der Ansprüche 1 bis 5, wobei im Riemenkörper (14) eine Anzahl Fasern (30) in Querrichtung verläuft und die Anzahl Fasern (30) in einer Gummimatrix (20) eingebettet ist, wobei das Verhältnis Fasern (30) zu Gummi 5 bis 30 Gewichtsteile Faser (30) auf 100 Gewichtsteile Gummi ist.

10. Riemen (10) nach Anspruch 9, wobei die Anzahl Fasern (30) eine Mischung aus Kunst- und Naturfasern ist und Kunst- und Naturfasern zusammen in einer Menge von weniger als 30 Gewichtsteile auf 100 Gewichtsteile Gummi in der Gummimatrix (20) vorhanden sind.

11. Riemen (10) nach irgendeinem der Ansprüche 1 bis 10, wobei das Schmelzen der Faser (30) durch einen Schleifvorgang bewirkt wird.

12. Riemen (10) nach Anspruch 11, wobei das Schmelzen der Faser (30) durch eine Schleifscheibe (72) mit 80 bis 100 mesh Oberflächenrauheit erfolgt.

13. Riemen (10) nach irgendeinem der Ansprüche 1 bis 12,
wobei der Riemen (10) eine Zugzone (18) und eine Druckzone (16) hat;
eine Anzahl in Querrichtung verlaufender Fasern (30) in der Druckzone (16) vorhanden ist;
die Anzahl Fasern (30) jeweils eine freiliegende aufgetriebene Oberfläche (38) an der einen Flankenoberfläche (34, 36) hat;
die Anzahl Fasern (30) in einem Gummi eingebettet ist, der mindestens einen Teil einer Flankenoberfläche (34, 36) bildet; und
die Fläche der Faseroberflächen (38), die auf der einen Flankenoberfläche (34, 36) in der Druckzone (16) freiliegt, 40% bis 80% der gesamten Oberfläche der einen Flankenoberfläche (34, 36), die die Druckzone bildet, einnimmt.

14. Riemen (10) nach Anspruch 13, wobei der Gummi, in den die Fasern (30) eingebettet sind, aus NR (Naturkautschuk), SBR (Styrol-Butadien-Kautschuk) oder CR (Chloropren-Kautschuk) ist.

15. Riemen (10) nach Anspruch 1, wobei der Riemenkörper (14) eine Zugzone (18) und eine Druckzone (16) hat und zudem
eine Anzahl in Längsrichtung verlaufender Rippen (12), wobei jede Rippe (12) in Querrichtung beabstandete, sich gegenüberliegende Flankenoberflächen (34, 36) besitzt, die zum Eingriff in eine Riemenscheibe bestimmt sind; und
in jeder Rippe (12) eine Anzahl gestreckten Fasern (30), die im allgemeinen in Querrichtung verlaufen, wobei die Anzahl Fasern (30) eine Querschnittsfläche senkrecht zu ihrer Länge besitzen, jede Faser (30) eine freiliegende Oberfläche (38) hat, die durch Schmelzen mindestens einer der Rippenflankenflächen (34, 36) entstanden ist, und die freiliegenden Oberflächen (38) der jeweiligen Anzahl Fasern (30) aufgetrieben sind, so daß sie insgesamt eine Fläche haben, die größer ist als die Querschnittsflächen der jeweiligen Anzahl von Fasern (30).

16. Riemen (10) nach Anspruch 15, wobei die Flächen der freiliegenden Faseroberflächen (38) insgesamt in der einen Rippenflankenfläche (34, 36) der Druckzone (16) zwischen 40% und 80% der Oberfläche der Flankenoberfläche (34, 36) in der Druckzone (16) ausmachen.

17. Riemen (10) nach Anspruch 15, wobei die freiliegenden Oberflächenbereiche (38) der jeweiligen Anzahl Fasern (30) 1,5 bis 5mal größer sind als die Querschnittsfläche von den jeweiligen Fasern (30).

18. Verfahren zur Herstellung eines Hochleistungs-Treibriemens (10), das die Schritten umfaßt:
das Vorsehen eines Riemenmantels (40), der eine Achse und eine Gummischicht (56) mit gestreckten Fasern (30) besitzt, die darin eingebettet sind und sich im allgemeinen parallel zueinander in einer ersten Richtung erstrecken, die im allgemeinen parallel zur Achse des Riemenmantels (40) ist;
das Drehen des Riemenmantels (40) um seine Achse; und
das Bereitstellen eines Schleifteils (72) zum Durchtrennen der Gummischicht (56) und der Fasern (30), damit Rippen (12) mit sich gegenüberliegenden Flanken (34, 36) erzeugt werden können; dadurch gekennzeichnet,
daß das Verfahren einen weiteren Arbeitsgang enthält, wobei der Riemenmantel (40) und das Schleifteil (72) in einem ersten und in einem zweiten Schritt fest gegeneinander gepreßt werden, wodurch das Schleifteil (72) die sich gegenüberliegenden Flanken (34, 36) erzeugt und die Oberflächen (38) der gestreckten Fasern (30) an den Oberflächen der Flanken (34,36) freilegt und vergrößert, wobei der Riemenmantel (40) und das Schleifteil (72) im ersten Schritt quer zur ersten Richtung mit einer ersten Geschwindigkeit und im zweiten Schritt mit einer zweiten Geschwindigkeit, die von der ersten Geschwindigkeit verschieden ist, zusammengepreßt werden.

19. Verfahren nach Anspruch 18, wobei die erste Geschwindigkeit größer ist als die zweite Geschwindigkeit.

20. Verfahren nach Anspruch 18 oder 19, wobei die Geschwindigkeit im ersten Schritt mindestens 0.3 mm/min beträgt.

21. Verfahren nach einem der Ansprüche 18 bis 20, wobei die Geschwindigkeit im zweiten Schritt weniger als 0.3 mm/min beträgt.

22. Verfahren nach irgendeinem der Ansprüche 18 bis 21, das einen Schritt enthält, wobei das Schleifteil (72) um eine Achse (74) gedreht wird, wenn der sich drehende Riemenmantel (40) und das Schleifteil (72) gegeneinander gepreßt werden.

23. Verfahren nach irgendeinem der Ansprüche 18 bis 22, wobei die Achse des Riemenmantels und die Achse (74) des Schleifteils im wesentlichen parallel sind und der Riemenmantel (40) und das Schleifteil (72) sich gegensinnig um ihre jeweiligen Achsen drehen.

24. Verfahren nach irgendeinem der Ansprüche 18 bis 23 wobei der Riemenmantel (40) eine äußere Kante (94) besitzt und sich die äußere Kante (94) im ersten Schritt mit mindestens 0.07 m/sec dreht.

25. Verfahren nach irgendeinem der Ansprüche 18 bis 24, wobei das Schleifteil (72) eine äußere Kante (92) besitzt und sich die äußere Kante (92) im ersten Schritt mit mindestens 15 m/s dreht.

26. Verfahren nach irgendeinem der Ansprüche 18 bis 25, wobei der Riemenmantel (40) eine äußere Kante (94) besitzt und sich die äußere Kante (94) des Riemenmantels (40) im zweiten Schritt nicht schneller als mit 0.07 m/sec dreht.

27. Verfahren nach irgendeinem der Ansprüche 18 bis 26, wobei das Schleifteil (72) eine äußere Kante (92) besitzt und sich die äußere Kante (92) des Schleifteils (72) im zweiten Schritt nicht schneller als mit 15 m/s dreht.

28. Verfahren nach irgendeinem der Ansprüche 18 bis 27, wobei sich im zweiten Schritt der Riemenmantel (40) und das Schleifteil (72) relativ zueinander mit 0.1 mm bis 1 mm bewegen.

29. Verfahren nach Anspruch 18, das die Schritte umfaßt:
Zusammenpressen des sich drehenden Riemenmantels (40) und des sich drehenden Schleifteils (72) gegeneinander über einen Bereich, so daß das Schleifteil (72) die sich gegenüberliegenden Riemenflanken (34, 36) bestimmt, und Drehen des Schleifteils (72) und des sich drehenden Riemenmantels (40) während eines ersten Teils des Bereichs mit einer ersten, relativen Drehgeschwindigkeit und in einem zweiten Teil des Bereichs mit einer zweiten, relativen Drehgeschwindigkeit.

30. Verfahren nach Anspruch 29, wobei der Riemenmantel (40) und das Schleifteil (72), gegeneinander gedrückt werden, aus einer ersten relativen Position, in der der Riemenmantel (40) und das Schleifteil (72) anfänglich eingreifen, in eine relative Endposition, in der die sich gegenüberliegenden Riemenflanken (34, 36) endgültig bestimmt sind, und wobei sich das Schleif teil (72) und der Riemenmantel (40) in ihre endgültige, relative Position bewegen, wobei die relative Drehgeschwindigkeit des Schleifteils (72) und des Riemenmantels (40) die niedrigere der beiden relativen Drehgeschwindigkeiten ist.

31. Verfahren nach Anspruch 29 oder 30, wobei sich der Riemenmantel (40) und das Schleifteil (72) gegensinnig um ihre jeweiligen Achsen drehen.

32. Verfahren nach irgendeinem der Ansprüche 29 bis 31, wobei sowohl der Riemenmantel (40) als auch das Schleifteil (72) eine äußere Kante (94, 92) besitzen und sich die äußere Kante (94) des Riemenmantels (40) im ersten Teil des Bereichs mit mindestens 0.07 m/sec und sich die äußere Kante des Schleifteils (72) mit mindestens 15 m/sec drehen.

33. Verfahren nach irgendeinem der Ansprüche 29 bis 32, wobei sowohl der Riemenmantel (40) als auch das Schleifteil (72) eine äußere Kante (94, 92) besitzen und sich die äußere Kante (94) des Riemenmantels (40) im zweiten Teil des Bereichs mit 0.07 m/sec und sich die äußere Kante des Schleifteils (72) mit weniger als 15 m/sec drehen.

34. Verfahren nach irgendeinem der Ansprüche 29 bis 33, wobei das Schleifteil (72) eine Oberflächenrauheit von 80 bis 200 mesh hat.

35. Verfahren nach Anspruch 34, wobei das Schleifteil (72) eine Oberflächenrauheit von 100 bis 120 mesh hat.

36. Verfahren nach irgendeinem der Ansprüche 29 bis 35, wobei der Riemenmantel (40) eine Druckzone (16), die mindestens teilweise aus Gummi besteht, und eine Zugzone (18) besitzt, und die Fasern (30) in einer Menge in dem Gummi der Druckzone (16) eingebettet sind, daß 5 bis 30 Gewichtsteile Fasern (30) auf 100 Gewichtsteile Gummi entfallen.

37. Verfahren nach irgendeinem der Ansprüche 29 bis 35, wobei der Riemenmantel (40) eine Druckzone (16), die mindestens teilweise aus Gummi besteht, und eine Zugzone (18) besitzt, und die Fasern (30) in einer Menge in dem Gummi der Druckzone (16) eingebettet sind, daß die an den Riemenflanken (34, 36) freiliegenden Faseroberflächen insgesamt 40% bis 80% der gesamten Oberfläche der Riemenflanken (34, 36) in der Druckzone ausmachen.

## Revendications

1. Courroie de transmission de force (10) comprenant un corps de courroie (14), formant des surfaces de flanc (34, 36) espacées dans le sens transversal qui sont tournées dans des sens opposés et sont destinées à coopérer avec une poulie associée à la courroie de transmission de force (10), et
au moins une fibre (30) disposée dans le corps de courroie (14) et s'étendant suivant une direction transversale, ladite fibre (30) ayant une aire en section transversale vis-à-vis de sa longueur et comportant une surface (38) qui est à nu à l'endroit d'au moins l'une des surfaces de flanc (34, 36),
caractérisée en ce que la surface (38) de la fibre qui est à nu a une forme épanouie par fusion de façon à comporter une aire en section transversale à nu qui est supérieure à l'aire en section transversale de la fibre (30), ladite aire de la fibre qui est à nu constituant un tampon d'amortissement acoustique qui réduit la production de bruit lorsque ladite surface de flanc (34, 36) vient au contact d'une poulie et la quitte au cours du fonctionnement de la courroie de transmission de force (10).

2. Courroie (10) suivant la revendication 1, dans laquelle de multiples fibres (30) sont prévues dans le corps de courroie (14) et ces multiples fibres (30) comportent des surfaces (38) ayant une forme épanouie, telles que la susdite surface de fibre (38), de sorte que de multiples surfaces épanouies (38) sont disposées à nu à l'endroit de chaque surface de flanc (34, 36) de la courroie.

3. Courroie (10) suivant l'une des revendications 1 et 2, dans laquelle la surface de fibre (38) qui est à nu a une aire qui vaut 1,5 à 5 fois l'aire en section transversale de la fibre (30).

4. Courroie (10) suivant l'une quelconque des revendications 1 à 3, dans laquelle la courroie (10) comporte une structure trapézoïdale nervurée présentant plusieurs nervures (12) qui s'étendent longitudinalement et dont chacune comporte des surfaces de flanc (34, 36) tournées dans des sens opposés.

5. Courroie (10) suivant l'une quelconque des revendications 1 à 4, dans laquelle la courroie (10) comporte une surface intérieure et une surface extérieure (24) et cette surface extérieure (24) est fournie par une feuille de tissu (26).

6. Courroie (10) suivant l'une quelconque des revendications 1 à 5, dans laquelle la fibre (30) est réalisée en au moins l'une des matières formée par un alcool vinylique, un polyester et un polyamide.

7. Courroie (10) suivant la revendication 6, dans laquelle il est prévu de multiples fibres (30), telles que la susdite fibre (30), les fibres (30) étant noyées dans une matrice de caoutchouc (20) et la proportion des fibres (30) au caoutchouc étant comprise entre 5 et 30 parties en poids de fibres (30) pour 100 parties en poids de caoutchouc.

8. Courroie (10) suivant l'une quelconque des revendications 1 à 5, dans laquelle de multiples fibres (30) sont prévues dans le corps de courroie (14), ces multiples fibres (30) étant constituées d'un mélange de fibres synthétiques et de fibres naturelles (30).

9. Courroie (10) suivant l'une quelconque des revendications 1 à 5, dans laquelle il est prévu de multiples fibres (30) s'étendant dans le corps de courroie (14) suivant une direction transversale, ces multiples fibres (30) étant noyées dans une matrice de caoutchouc (20) et la proportion des fibres (30) au caoutchouc étant comprise entre 5 et 30 parties en poids de fibres (30) pour 100 parties en poids de caoutchouc.

10. Courroie (10) suivant la revendication 9, dans laquelle les multiples fibres (30) sont constituées d'un mélange de fibres synthétiques et de fibres naturelles (30) et ces fibres synthétiques et fibres naturelles (30) sont les unes et les autres en une quantité inférieure à 30 parties en poids pour 100 parties en poids de caoutchouc contenu dans la matrice de caoutchouc (20).

11. Courroie (10) suivant l'une quelconque des revendications 1 à 10, dans laquelle la fusion de la fibre (30) est réalisée au moyen d'un procédé de meulage.

12. Courroie (10) suivant la revendication 11, dans laquelle la fusion de la fibre (30) est réalisée au moyen d'une meule (72) ayant une rugosité superficielle comprise entre les mailles 80 et 100.

13. Courroie (10) suivant l'une quelconque des revendications 1 à 12, dans laquelle la courroie (10) comporte une section (18) travaillant en traction et une section (16) travaillant en compression, de multiples fibres (30) s'étendant transversalement sont prévues dans la section (16) travaillant en compression, ces multiples fibres (30) comportant chacune, à l'endroit d'une surface de flanc (34,36), une surface (38) à nu qui a une forme épanouie, les multiples fibres (30) sont noyées dans le caoutchouc qui constitue au moins une partie de ladite surface de flanc (34, 36) et l'aire des surfaces (38) des fibres qui sont à nu à l'endroit de ladite surface de flanc (34, 36) dans la section (16) travaillant en compression est comprise entre 40 et 80 % de l'aire totale de ladite surface de flanc (34, 36) formant ladite section (16) travaillant en compression.

14. Courroie (10) suivant la revendication 13, dans laquelle le caoutchouc dans lequel les fibres (30) sont noyées est au moins un caoutchouc choisi parmi CN (caoutchouc naturel), CSB (caoutchouc styrène-butadiène) et CC (caoutchouc chloroprène).

15. Courroie (10) suivant la revendication 1, dans laquelle le corps de courroie (14) comporte une section travaillant en traction (18) et une section travaillant en compression (16) et comprend en outre plusieurs nervures s'étendant longitudinalement (12), chaque nervure (12) comportant des surfaces de flanc (34, 36) espacées dans le sens transversal qui sont tournées dans des sens opposés et sont destinées à venir au contact d'une poulie, et de multiples fibres de forme allongée (30) disposées dans chaque nervure (12) et s'étendant pratiquement suivant une direction transversale, tandis que les multiples libres (30) ont une aire en section transversale prise transversalement à sa longueur et chaque libre (30) a une surface (38) à nu qui est formée par fusion à l'endroit d'au moins l'une des surfaces de flanc (34, 36) de la nervure, les surfaces (38) à nu situées sur chacune des multiples libres (30) ayant une forme évasée de façon à former une aire combinée supérieure à l'aire en section transversale de chacune des multiples libres (30).

16. Courroie (10) suivant la revendication 15, dans laquelle l'aire combinée des surfaces de fibre (38) qui sont à nu à l'endroit de ladite surface de flanc de nervure (34, 36) située dans la section (16) travaillant en compression est comprise entre 40 et 80 % de l'aire de cette surface de flanc (34, 36) située dans la section (16) travaillant en compression.

17. Courroie (10) suivant la revendication 15, dans laquelle les aires de la surface (38) à nu qui correspondent à chacune des multiples fibres (30) valent 1,5 à 5 fois l'aire en section transversale de chacune des fibres (30).

18. Procédé de réalisation d'une courroie de transmission de force (10), ce procédé comportant les opérations consistant :
à prévoir un manchon de formation de courroies (40) qui présente un axe et comprend une couche de caoutchouc (56) comportant des libres de forme allongée (30) qui y sont noyées et s'étendent d'une manière pratiquement parallèle entre elles suivant une première ligne qui est pratiquement parallèle à l'axe du manchon de formation de courroies (40),
à faire tourner le manchon de formation de courroies (40) autour de son axe et
à prévoir un élément de meulage (72) servant à découper la couche de caoutchouc (56) et les fibres (30) de façon à réaliser des nervures (12) comportant des flancs (34, 36) tournés dans des sens opposés,
caractérisé en ce qu'il comprend en outre l'opération consistant à appliquer le manchon de formation de courroies (40) entraîné en rotation et l'élément de meulage (72) l'un contre l'autre suivant une première et une seconde étapes et, résultant de cette opération, à faire former à l'élément de meulage (72) lesdits flancs (34, 36) tournés dans des sens opposés et à lui faire mettre à nu et agrandir des surfaces (38) desdites fibres de forme allongée (30) à l'endroit des surfaces desdits flancs (34, 36), le manchon de formation de courroies (40) et l'élément de meulage (72) étant appliqués l'un contre l'autre transversalement à la première ligne à une première vitesse pendant la première étape et à une seconde vitesse, différente de la première vitesse, pendant la seconde étape.

19. Procédé suivant la revendication 18, selon lequel la première vitesse est supérieure à la seconde vitesse.

20. Procédé suivant l'une des revendications 18 et 19, selon lequel la vitesse de la première étape est au moins égale à 0,3 mm/min.

21. Procédé suivant l'une quelconque des revendications 18 à 20, selon lequel la vitesse de la seconde étape est intérieure à 0,3 mm/min.

22. Procédé suivant l'une quelconque des revendications 18 à 21, comportant l'opération consistant à faire tourner l'élément de meulage (72) autour d'un axe (74) pendant que le manchon de formation de courroies (40) entraîné en rotation et l'élément de meulage (72) sont appliqués l'un contre l'autre.

23. Procédé suivant l'une quelconque des revendications 18 à 22, selon lequel l'axe du manchon de formation de courroies et l'axe (74) de l'élément de meulage sont pratiquement parallèles et le manchon de formation de courroies (40) et l'élément de meulage (72) sont entraînés en rotation dans des sens opposés autour de leurs axes respectifs.

24. Procédé suivant l'une quelconque des revendications 18 à 23, selon lequel le manchon de formation de courroies (40) comporte un contour périphérique extérieur (94), ce contour périphérique extérieur (94) tournant pendant la première étape à au moins 0,07 m/s.

25. Procédé suivant l'une quelconque des revendications 18 à 24, selon lequel l'élément de meulage (72) comporte un contour périphérique extérieur (92), ce contour périphérique extérieur (92) tournant pendant la première étape à au moins 15 m/s.

26. Procédé suivant l'une quelconque des revendications 18 à 25, selon lequel le manchon de formation de courroies (40) comporte un contour périphérique extérieur (94), ce contour périphérique extérieur (94) du manchon (40) tournant pendant la seconde étape à une vitesse ne dépassant pas 0,07 m/s.

27. Procédé suivant l'une quelconque des revendications 18 à 26, selon lequel l'élément de meulage (72) comporte un contour périphérique extérieur (92), ce contour périphérique extérieur (92) de l'élément de meulage (72) tournant pendant la seconde étape à une vitesse ne dépassant pas 15 m/s.

28. Procédé suivant l'une quelconque des revendications 18 à 27, selon lequel, dans la seconde étape, le manchon de formation de courroies (40) et l'élément de meulage (72) se déplacent l'un vis-à-vis de l'autre d'une valeur comprise entre 0,1 et 1 mm.

29. Procédé suivant la revendication 18, comprenant les opérations consistant :
à appliquer le manchon de formation de courroies (40) entraîné en rotation et l'élément de meulage (72) l'un contre l'autre sur l'étendue d'un domaine faisant réaliser à l'élément de meulage (72) lesdits flancs de courroie (34, 36) tournés dans des sens opposés et à faire tourner l'élément de meulage (72) et le manchon de formation de courroies entraîné en rotation (40) à une première vitesse relative de rotation pendant une première partie dudit domaine et à une seconde vitesse relative de rotation pendant une seconde partie dudit domaine.

30. Procédé suivant la revendication 29, selon lequel le manchon de formation de courroies (40) et l'élément de meulage (72) sont appliqués l'un contre l'autre, d'une première position relative, dans laquelle le manchon de formation de courroies (40) et l'élément de meulage (72) viennent initialement en contact, à une position relative finale dans laquelle les flancs de courroie (34, 36) tournés dans des sens opposés sont totalement formés et la vitesse relative de rotation de l'élément de meulage (72) et du manchon de formation de courroies (40) est la plus faible des première et seconde vitesses relatives de rotation pendant que le manchon de formation de courroies (40) et l'élément de meulage (72) se déplacent jusqu'à leur position relative finale.

31. Procédé suivant l'une des revendications 29 et 30, selon lequel le manchon de formation de courroies (40) et l'élément de meulage (72) tournent dans des sens opposés autour de leurs axes respectifs.

32. Procédé suivant l'une quelconque des revendications 29 à 31, selon lequel le manchon de formation de courroies (40) et l'élément de meulage (72) comportent chacun un contour périphérique extérieur (94, 92) et, pendant la première partie dudit domaine, le contour périphérique extérieur (94) du manchon (40) tourne à au moins 0,07 m/s et le contour périphérique extérieur (92) de l'élément de meulage (72) tourne à au moins 15 m/s.

33. Procédé suivant l'une quelconque des revendications 29 à 32, selon lequel le manchon de formation de courroies (40) et l'élément de meulage (72) comportent chacun un contour périphérique extérieur (94, 92) et, pendant la seconde partie dudit domaine, le contour périphérique extérieur (94) du manchon (40) tourne à 0,07 m/s et le contour périphérique extérieur (92) de l'élément de meulage (72)tourne à moins de 15 m/s.

34. Procédé suivant l'une quelconque des revendications 29 à 33, selon lequel l'élément de meulage (72) possède une rugosité superficielle comprise entre les mailles 80 et 200.

35. Procédé suivant la revendication 34, selon lequel l'élément de meulage (72) possède une rugosité superficielle comprise entre les mailles 100 et 120.

36. Procédé suivant l'une quelconque des revendications 29 à 35, selon lequel le manchon de formation de courroies (40) comprend une section (16) travaillant en compression, formée au moins partiellement de caoutchouc, et une section (18) travaillant en traction, tandis que les fibres (30) sont noyées dans le caoutchouc de la section (16) travaillant en compression, en une proportion telle que les fibres (30) constituent 5 à 30 parties en poids pour 100 parties en poids de caoutchouc.

37. Procédé suivant l'une quelconque des revendications 29 à 35, selon lequel le manchon de formation de courroies (40) comporte une section (16) travaillant en compression, formé au moins partiellement de caoutchouc, et une section (18) travaillant en traction, tandis que les fibres (30) sont noyées dans le caoutchouc de la section (16) travaillant en compression dans une proportion telle que l'aire combinée des surfaces de fibre qui sont à nu à l'endroit des flancs de courroie (34, 36) est égale à 40-80 % de l'aire totale des flancs de courroie (34, 36) à l'endroit de la section travaillant en compression.
